Europäisches Patentamt

European Patent Office

Office européen des brevets

(11) Publication number : **0 496 588 A1**

# (12) EUROPEAN PATENT APPLICATION

(21) Application number : **92300520.1**

(22) Date of filing : **22.01.92**

(51) Int. Cl.$^5$ : **G07F 5/24, H04M 17/02**

(30) Priority : **23.01.91 GB 9101443**

(43) Date of publication of application :
**29.07.92 Bulletin 92/31**

(84) Designated Contracting States :
**AT BE CH DE DK ES FR GR IT LI LU NL PT SE**

(71) Applicant : **GPT LIMITED**
**New Century Park P.O. Box 53**
**Coventry, CV3 1HJ (GB)**

(72) Inventor : **Guile, Leslie**
**21 Croxteth Drive, Rainford**
**St. Helens, Merseyside WA11 8JZ (GB)**
Inventor : **Crossman, Thomas**
**25 Sycamore Road**
**Huyton, Liverpool L36 5TU (GB)**

(74) Representative : **Branfield, Henry Anthony**
**The General Electric Company plc Patent**
**Department(Wembley Office) Hirst Research**
**Centre East Lane**
**Wembley, Middlesex HA9 7PP (GB)**

(54) **Coin mechanisms.**

(57)   Coin and token mechanisms for use in such items as payphones, ideally should be capable of receiving a range of coins/tokens of different nominal values. The cost of the service varies according to the duration and destination of the call. The mechanism should be able to refund coins not used because a connection is not established or the original payment is greater than the charge for the call. A wheel (6,7) having a plurality of pockets (10) retains the coins as it is rotated, the coins eventually being directed to a coin store or a refund channel.

Fig.1.

EP 0 496 588 A1

The present invention concerns coin or token mechanisms. Such mechanisms find particular application with payphones where a person wishing to make a phonecall places money into the phone prior to making or during the call. A number of problems arise in payphones and in other machines in which a service is provided on the insertion of coins or tokens. Firstly the coins or tokens have to be validated. A second problem is that it is undesirable that a user has always to insert the exact number of coins or tokens for a particular function. For example in the case of telephones the cost of the service to be paid for will vary in accordance with the duration and destination of the call. It is accordingly important that the machine be capable not only of validating coins but of either refunding coins not used in the case of a connection not being established or of refunding part of the original payment if this proves to be greater than the final charge. A further complication is provided by the desirability of the mechanism being capable of accepting a range of coins or tokens of different nominal values and also of differing sizes. It is also important that the mechanism should be flexible so that it can either be used with various currencies or can cope with changes in the sizes of coins which can occur within a single currency over a period of time.

Accordingly the present invention provides a coin or token handling apparatus a wheel having a plurality of pockets arranged around its periphery, each pocket being open at the outer edge of the wheel, a retaining wall surrounding part of the periphery of the wheel, an electronic coin validator having an outlet leading to the periphery of the wheel so that a validated coin can fall into a pocket of the wheel, means for rotating the wheel so that a coin deposited from the electronic coin validator is retained within a pocket by the retaining wall as the wheel rotates, the retaining wall having a lower ending which allows a coin in a pocket to fall under gravity into a channel as that pocket passes the lower ending, the channel being provided with a gate mechanism such that a coin falling from its pocket in the wheel either passes to a store for cashed coins or to a refund channel.

Preferably there are two wheels mounted about a common axis, a sorter mechanism being provided to direct coins validated by the electronic coin validator from one wheel to the other when the first wheel is full.

Preferably each pocket in the or each wheel has an opening which, when the wheel is in a coin-receiving position, co-operates with a sensor to determine whether or not there is a coin within that pocket.

In order that the invention may be more readily understood an embodiment thereof will now be described by way of example and with reference to the accompanying drawings, in which:

Figure 1 is a side view of a coin handling mechanism according to the present invention, and

Figure 2 is a view from above through a section of the mechanism of Figure 1.

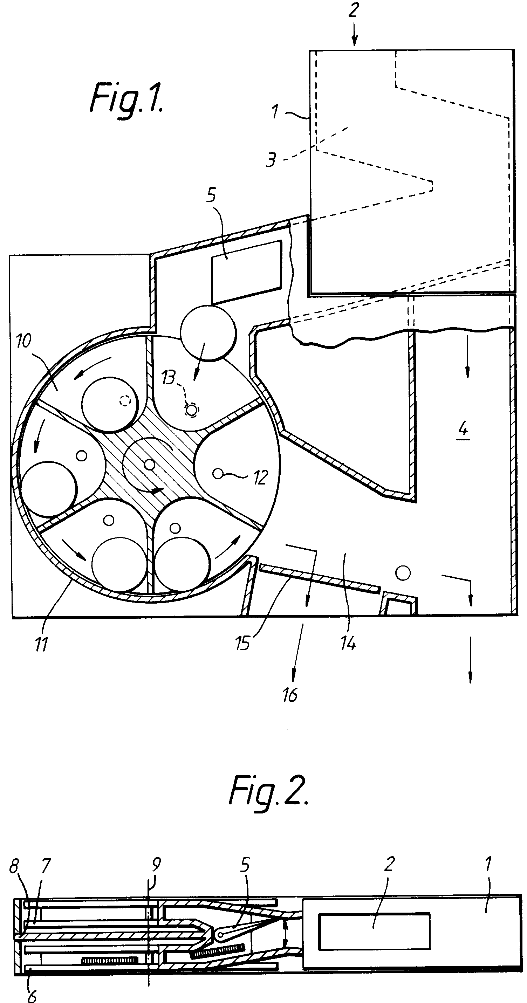

Referring now to Figure 1 of the drawings there is shown an electronic coin validator 1 having a coin entry slot 2 through which a user can feed coins. The validator 1 includes a channel 3 down which coins are allowed to roll at a specific angle. The actual method by which the authenticity and value of the coins is checked is not relevant to the present invention and can take a number of standard forms. However in operation the electronic coin validator sends a signal to a microprocessor (not shown) which controls an electrically operated gate which either directs a validated coin further down channel 3 or directs it to a reject shute 4 and hence back to the user.

Having been accepted as valid the coin enters a sorter mechanism containing an electrically operated gate 5. This gate 5 moves across the path of the coin causing it to be deflected into one of two pocket carrying wheels 6 and 7.

The sorter mechanism including the gate 5 sits centrally astride a main back plate 8 which has a transverse shaft 9 protruding from each side. The shaft 9 is itself fixed and has the wheels 6 and 7 mounted on its opposite ends. These wheels are driven by electric motors (not shown), the motors being individually drivable under the control of the microprocessor so that the wheels 6 and 7 can be rotated independently.

Each wheel has a number of cells or pockets 10 arranged around its periphery, each pocket 10 being open at the outer edge of the wheel and each wheel is mounted to rotate within a retaining wall 11 which extends around a major part of the periphery of the wheel. In order to ensure that a pocket is available to receive a validated coin each of the pockets includes a hole 12 through which a light beam can be passed to a photo sensor 13 mounted on the backplate when the pocket is directly below the outlet of the sorter mechanism and ready to receive a validated coin.

When a coin enters this pocket the light beam is broken causing the electric motor of the appropriate wheel to start. The wheel is turned at a predetermined speed carrying the coin with it. The wheel indexes round so that an empty pocket is brought into line with the exit of the sorter mechanism. When the holes in this empty pocket are in such a position as to allow the light beam through to the sensor 13 the microprocessor switches off the motor and the wheel is brought to a stop. A further coin is thus able to enter the wheel. The process is repeated until a set number of coins has entered the wheel. As a coin automatically falls from the wheel as its pocket moves past the lower edge of the retaining wall the wheel can never hold a coin in every pocket.

When one wheel is full the microprocessor operates the sorter gate 5, so that subsequent coins pass into the second wheel. The electronic coin validator mechanism 1 is arranged to prevent the passage of coins to the wheels once the second wheel is full.

As can be seen in operation a coin is automatically released from the wheel as the wheel is indexed past the lower end of the retaining wall. Each coin leaving the wheel enters a chute 14 containing a gate 15 operated by a solenoid which diverts the coin either into a cash chute 16 and then to a cash container (not shown) or to the refund chute for return to the customer.

The system just described has a number of advantages:

Firstly it is capable of accepting a wide variety of coin sizes and weights.

Secondly coin insertion sequence is maintained for the purposes of microprocessor control.

Thirdly the use of individual pockets maintains complete coin separation and removes the risk of coin jams.

Fourthly no adjustments are required during assembly or use.

Fifthly the system will handle world coinage without modification other than re-programming.

Furthermore coin positions within the store cannot be altered by fraudulent means. Finally by providing a duplication of coin stores the system is resilient to malfunctions since, in the event of a fault, operation may continue with reduced capacity.

## Claims

1. A coin or token handling apparatus comprising a wheel having a plurality of pockets arranged around its periphery, each pocket being open at the outer edge of the wheel, a retaining wall surrounding part of the periphery of the wheel, an electronic coin validator having an outlet leading to the periphery of the wheel so that a validated coin can fall into a pocket of the wheel, means for rotating the wheel so that a coin deposited from the electronic coin validator is retained within a pocket by the retaining wall as the wheel rotates, the retaining wall having a lower ending which allows a coin in a pocket to fall under gravity into a channel as that pocket passes the lower ending, the channel being provided with a gate mechanism such that a coin falling from its pocket in the wheel either passes to a store for cashed coins or to a refund channel.

2. A coin or token handling apparatus as claimed in Claim 1, comprising two wheels mounted about a common axis, a sorter mechanism being provided to direct coins validated by the electronic coin validator from one wheel to the other when the first wheel is full.

3. A coin or token handling apparatus as claimed in Claim 1 or 2, wherein each pocket in the or each wheel has an opening which, when the wheel is in a coin-receiving position, co-operates with a sensor to determine whether or not there is a coin within that pocket.

4. A payphone including a coin or token handling apparatus as claimed in any preceding claim.

*Fig.1.*

*Fig.2.*

European Patent Office

## EUROPEAN SEARCH REPORT

Application Number

| DOCUMENTS CONSIDERED TO BE RELEVANT | | | EP 92300520.1 |
|---|---|---|---|
| Category | Citation of document with indication, where appropriate, of relevant passages | Relevant to claim | CLASSIFICATION OF THE APPLICATION (Int. Cl.5) |
| X | DE - A - 3 541 869 (STANDARD ELEKTRIK LORENZ AG) * Totality * -- | 1 | G 07 F 5/24 H 04 M 17/02 |
| A | US - A - 4 673 074 (MC CORMICK) * Totality * -- | 1 | |
| A | US - A - 4 234 071 (LE-HONG) * Totality * -- | 1 | |
| A | GB - A - 988 847 (TATEISI DENKI KABUSHIKI-KAISHA) * Totality * ---- | 1 | |
| | | | TECHNICAL FIELDS SEARCHED (Int. Cl.5) |
| | | | G 07 F 3/00 G 07 F 5/00 H 04 M 17/00 |
| The present search report has been drawn up for all claims | | | |

| Place of search | Date of completion of the search | Examiner |
|---|---|---|
| VIENNA | 22-04-1992 | BEHMER |